# EUROPÄISCHE PATENTANMELDUNG

(11) **EP 0 941 686 A1**
(43) Veröffentlichungstag der Anmeldung: **15.09.1999**
(21) Anmeldenummer: 99104434.8
(22) Anmeldetag: 05.03.1999
(51) Int. Cl.: A47J 37/07

(54) **Grill**

(30) Priorität: 11.03.1998 DE 29804290 U
(71) Anmelder: Simunec, Mladen, 44147 Dortmund (DE)
(72) Erfinder: Simunec, Mladen, 44147 Dortmund (DE)
(74) Vertreter: Patentanwälte Meinke, Dabringhaus und Partner

(57) **Zusammenfassung**

Ein Grill mit einem Rahmenaufbau mit außenliegendenwänden, wobei in den Rahmenaufbau eine Aufnahmewanne für Holzkohle oder dergl. lösbar eingesetzt ist, und mit einem gegenüber dem Rahmenaufbau mittels einer Verstelleinrichtung höhenverstellbaren Grillrost, soll so verbessert werden, daß er insgesamt leichter zu handhaben ist, wobei insbesondere die Höheneinstellung des Grillrostes vereinfacht werden soll.

Dies wird dadurch erreicht, daß die Verstelleinrichtung an zwei gegenüberliegenden Seiten des Rahmenaufbaus (2) in diesem geführte vertikale Hubelemente (9) aufweist, die jeweils über ein Getriebe mit einer gemeinsamen, im Rahmenaufbau gelagerten Verschwenkachse (10) verbunden sind, wobei die Verschwenkachse (10) drehfest mit einem außerhalb des Rahmenaufbaus (2) angeordneten Betätigungselement (11) verbunden ist.

## Beschreibung

Die Erfindung betrifft einen Grill mit einem Rahmenaufbau mit außenliegenden Gehäusewänden, wobei in den Rahmenaufbau eine Aufnahmewanne für Holzkohle oder dergl. lösbar eingesetzt ist, und mit einem gegenüber dem Rahmenaufbau mittels einer Verstelleinrichtung höhenverstellbaren Grillrost.

Derartige Grills sind in verschiedenen Ausführungsformen bekannt, wobei im Hinblick auf den Einsatzzweck im Privat- oder Gastronomiebereich die Anforderungen an derartige Grills sehr unterschiedlich sind, insbesondere im Hinblick auf Festigkeit bzw. Haltbarkeit und Größe.

Je nach Grillgut und Holzkohlentemperatur oder eingesetzter Holzkohlenmenge ist es häufig erforderlich, den Höhenabstand des Grillrostes gegenüber der Holzkohle verändern zu können. Bei einfachen Grills für den Privatgebrauch ist dies häufig dadurch möglich, daß man den Grillrost in unterschiedlicher Höhe in den Rahmenaufbau oder Aufsatz des Grills einhängen kann. Dies läßt sich allerdings ohne Hilfsmittel praktisch nur dann durchführen, wenn der Grillrost noch nicht heiß ist. Bei professionellen Grills dagegen ist ein manuelles Herausnehmen und Einhängen des Grillrostes üblicherweise nicht möglich, derartige Grillroste weisen eine beträchtliche Größe und damit auch ein beträchtliches Gewicht auf. Es sind deshalb schon Grills bekanntgeworden, die Verstelleinrichtungen aufweisen, um den Grillrost höhenverstellbar auszubilden. Diese bekannten Verstelleinrichtungen sind jedoch sehr aufwendig und bestehen aus einer Vielzahl von Bauteilen, wodurch das Gesamtgewicht des Grills beachtlich erhöht wird. Das Gesamtgewicht derartiger Grills wird darüber hinaus auch noch wesentlich dadurch erhöht, daß üblicherweise die gesamten Gehäusewandungen des Grills mit innenliegenden Isolierungen ausgerüstet sind, was zusätzlichen Aufwand und zusätzliches Gewicht bedeutet. Außerdem ist die Art der Wärmeisolierung auch recht unbefriedigend, da ein großer Anteil der durch die brennende Holzkohle erzeugten Wärme nicht zum Grillen genutzt wird, sondern praktisch ungenutzt an die Umgebung abgegeben wird.

Aufgabe der Erfindung ist es, einen gattungsgemäßen Grill so zu verbessern, daß er insgesamt leichter zu handhaben ist, wobei insbesondere die Höheneinstellung des Grillrostes vereinfacht werden soll. Zusätzlich soll in Ausgestaltung auch die Wärmeisolierung verbessert werden.

Diese Aufgabe wird mit einem Grill der eingangs bezeichneten Art erfindungsgemäß dadurch gelöst, daß die Verstelleinrichtung an zwei gegenüberliegenden Seiten des Rahmenaufbaus in diesem geführte vertikale Hubelemente aufweist, die jeweils über ein Getriebe mit einer gemeinsamen, im Rahmenaufbau gelagerten Verschwenkachse verbunden sind, wobei die Verschwenkachse drehfest mit einem außerhalb des Rahmenaufbaus angeordneten Betätigungselement verbunden ist.

Mit der Erfindung steht ein Grill zur Verfügung, der besonders handhabungsfreundlich ist, da auf einfache Weise eine Höhenverstellung des Grillrostes möglich ist, indem einfach mittels des Betätigungselementes die Verschwenkachse verschwenkt wird und dadurch die Hubelemente vertikal nach oben oder nach unten verfahren werden, um den Grillrost direkt bzw. einen den Grillrost tragenden Rostrahmen anzuheben oder abzusenken. Die Verstelleinrichtung ist dabei raumsparend ausgebildet, so kann die Verschwenkachse problemlos unterhalb der Auffangwanne untergebracht und im Rahmenaufbau gelagert werden, die vertikalen Hubelemente können an den jeweiligen Seitenwandbereichen des Rahmenaufbaus angeordnet werden. Außerdem benötigt die Verstelleinrichtung relativ wenig Bauteile, so daß die Verstelleinrichtung selbst ein relativ geringes Gewicht aufweist und das Gesamtgewicht des Grills somit gegenüber bekannten Grills dieser Art deutlich reduziert werden kann.

Konstruktiv besonders vorteilhaft ist vorgesehen, daß das Getriebe der Verstelleinrichtung jeweils einen drehfest mit der Verschwenkachse verbundenen Schwenkhebel aufweist, der freiendseitig mit einem abgewinkelten Ende in eine horizontal angeordnete Längsführung des jeweiligen Hubelementes eingreift und entlang dieser bei Verschwenkung der Verschwenkachse verfahrbar ist, derart, daß dabei das jeweilige, im Rahmenaufbau geführte vertikale Hubelement anheb- bzw. absenkbar ist.

Um eine möglichst symmetrische Lastaufnahme des jeweiligen vertikalen Hubelementes zu erreichen, ist vorteilhaft vorgesehen, daß das jeweilige vertikale Hubelement jeweils zwei Hubstangen aufweist, zwischen denen die Längsführung angeordnet ist, derart, daß das vertikale Hubelement eine U-Form aufweist. Die freien Enden der beiden Hubstangen sind dann entsprechend mit dem Gitterrostrahmen oder ggf. auch mit dem Gitterrost selbst verbunden.

Weiterhin ist vorteilhaft vorgesehen, daß die Hubstangen im Rahmenaufbau in nutförmigen Führungen geführt sind, wobei die nutförmigen Führungen im oberen Bereich rohrförmig geschlossen ausgebildet sind und die Hubstangen allseitig umgeben. Der maximale Verstellweg der Hubstangen nach oben wird also dadurch begrenzt, daß die nutförmigen Führungen im oberen Bereich rohrförmig geschlossen sind und somit eine weitere Aufwärtsbewegung der Hubstangen verhindern, weil dann die jeweilige Längsführung am rohrförmig geschlossenen Bereich anstößt. Vorteilhaft sind die Führungen und die Hubstangen dabei kreisförmig ausgebildet, sie können aber auch einen anderen Querschnitt aufweisen.

Um die Justierung der Verstelleinrichtung bei der Erstmontage des Grills zu vereinfachen, ist vorteilhaft vorgesehen, daß die Schwenkhebel mittels Befestigungsschellen und/oder Schweißverbindungen an der Verschwenkachse drehfest befestigt sind. Die Schwenkhebel können dann zunächst in der richtigen Lage gegenüber der Verschwenkachse und deren Betätigungselement justiert und befestigt werden, anschließend können die Schwenkhebel in dieser Lage dann mittels Schweißverbindung an der Verschwenkachse drehfest befestigt werden.

Um die Handhabung der Verstelleinrichtung des Grills weiter zu vereinfachen, ist besonders vorteilhaft vorgesehen, daß die Verstelleinrichtung eine Hebehilfe aufweist, die vorzugsweise als mit der Verschwenkachse über einen Hebel oder dergl. zusammenwirkende Feder ausgebildet ist. Dabei reicht es üblicherweise aus, eine einzige Feder für die Verschwenkachse vorzusehen, grundsätzlich ist es aber auch möglich, an beiden Endbereichen jeweils im Bereich der Schwenkhebel entsprechende Federn anzuordnen.

Ganz besonders vorteilhaft ist vorgesehen, daß die Aufnahmewanne wenigstens im Bereich ihrer Seitenwände doppelwandig unter Ausbildung eines umlaufenden Hohlraumes ausgebildet ist, wobei der Hohlraum mit einer Isolierung ausgefüllt ist. Diese Gestaltung der Aufnahmewanne eignet sich besonders in Verbindung mit dem vorstehend beschriebenen Grill, ist aber grundsätzlich auch für Grills mit anders ausgebildeter Verstelleinrichtung oder ohne Verstelleinrichtung geeignet. Durch diese isolierte Aufnahmewanne sind die Wärmeverluste gegenüber bekannten Grills mit Gehäusewandisolierung wesentlich zu verringern, so daß der Hohlzkohlenverbrauch deutlich reduziert werden kann. Außerdem wird das Gesamtgewicht des Grills weiter verringert, weil eine Isolierung nur noch im Bereich der Aufnahmewanne erforderlich ist. Als Isoliermaterial kann beispielsweise Keramikvlies eingesetzt werden.

Um den Isolierungseffekt noch weiter zu verbessern, ist ganz besonders vorteilhaft vorgesehen, daß auch die Bodenfläche der Aufnahmewanne doppelwandig ausgebildet ist und der entsprechende Hohlraum mit einer Isolierung ausgefüllt ist. Messungen haben ergeben, daß bei einer derart ausgebildeten Auffangwanne bei Gebrauch des Grills die Temperatur unterhalb der Auffangwanne nur bei etwa 200°C liegt, während sie üblicherweise bei herkömmlichen Grills durchaus 700°C erreichen kann.

Weiterhin ist vorteilhaft vorgesehen, daß die Bodenfläche zwischen der Isolierung mit Schlitzen versehen ist, die ein Austreten von Asche ermöglichen.

Die Erfindung ist nachstehend anhand der Zeichnung beispielsweise näher erläutert. Diese zeigt in:
- Fig. 1: eine Draufsicht auf einen erfindungsgemäßen Grill,
- Fig. 2: einen Vertikalschnitt durch den Grill nach Figur 1,

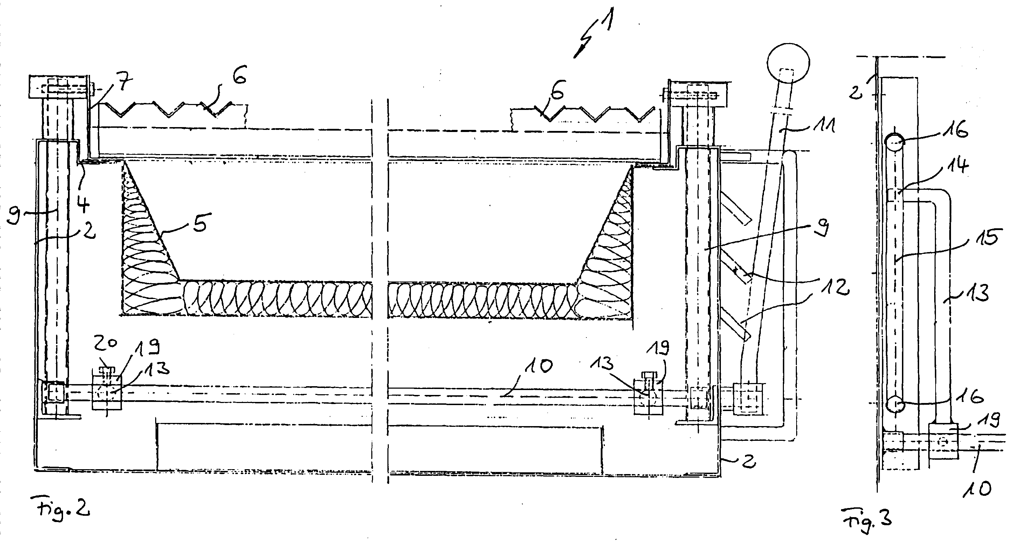

- Fig. 3: ein Detail der Verstelleinrichtung in Draufsicht,
- Fig. 4: ein weiteres Detail der Verstelleinrichtung in Seitenansicht,
- Fig. 5: ein weiteres Detail der Verstelleinrichtung in Seitenansicht,
- Fig. 6: eine Draufsicht auf eine Auffangwanne des Grills und
- Fig. 7: einen Vertikalschnitt durch die Auffangwanne nach Figur 6.

Ein allgemein mit 1 bezeichneter erfindungsgemäßer Grill weist zunächst einen Rahmenaufbau 2 mit Gehäusewänden 3 auf, zusätzlich kann der Rahmenaufbau 2 an der Unterseite auch mit einem nicht dargestellten Traggerüst mit oder ohne Fahrwerk ausgebildet sein. Der Rahmenaufbau 2 ist mit einem Aufnahmerahmen 4 für eine Aufnahmewanne 5 ausgerüstet, die zur Aufnahme von Holzkohle oder dergl. dient. Diese Aufnahmewanne 5 kann vorzugsweise entnommen werden.

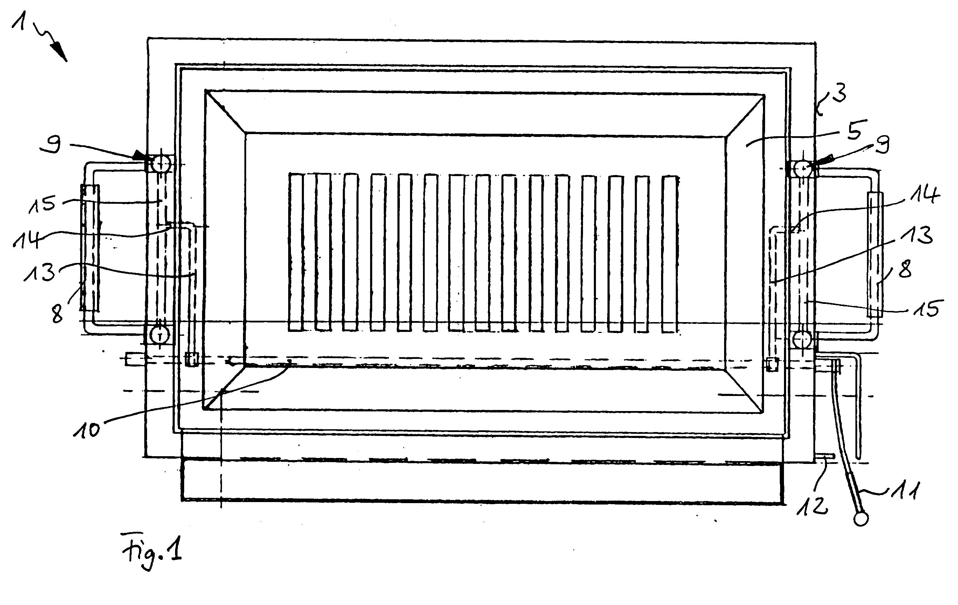

Weiterhin weist der Grill 1 einen Grillrost 6 auf, der vorzugsweise in einem Rostrahmen 7 aufgenommen ist. Dieser Grillrost 6 ist in Figur 1 nicht dargestellt. Am Rahmenaufbau 2 können Handhabungsgriffe 8 angeordnet sein.

Um den vertikalen Höhenabstand des Grillrostes 6 gegenüber der Holzkohle bzw. der Aufnahmewanne 5 verändern zu können, weist der Grill 1 eine Verstelleinrichtung auf. Diese Verstelleinrichtung umfaßt zunächst an zwei gegenüberliegenden Seiten des Rahmenaufbaus 2 in diesem geführte vertikale Hubelemente 9, die jeweils über ein Getriebe mit einer gemeinsamen, im Rahmenaufbau 2 gelagerten Verschwenkachse 10 verbunden sind, wobei die Verschwenkachse 10 drehfest mit einem außerhalb des Rahmenaufbaus 2 angeordneten Betätigungselement 11 verbunden ist, welches in verschiedenen Auslenklagen in Rastausnehmungen 12 an der Außenseite des Rahmenaufbaus 2 einrasten kann.

Das Getriebe zwischen den vertikalen Hubelementen 9 und der Verschwenkachse 10 weist dabei jeweils einen drehfest mit der Verschwenkachse 10 verbundenen Schwenkhebel 13 auf, der freiendseitig mit einem abgewinkelten Ende 14 in eine Längsführung 15 (am besten zu erkennen in Figur 4) des jeweiligen Hubelementes 9 eingreift und entlang dieser Längsführung 15 bei Verschwenkung der Verschwenkachse 10 und damit des Schwenkhebels 13 verfahrbar ist, derart, daß dabei das jeweilige, im Rahmenaufbau 2 geführte, vertikale Hubelement 9 anheb- bzw. absenkbar ist.

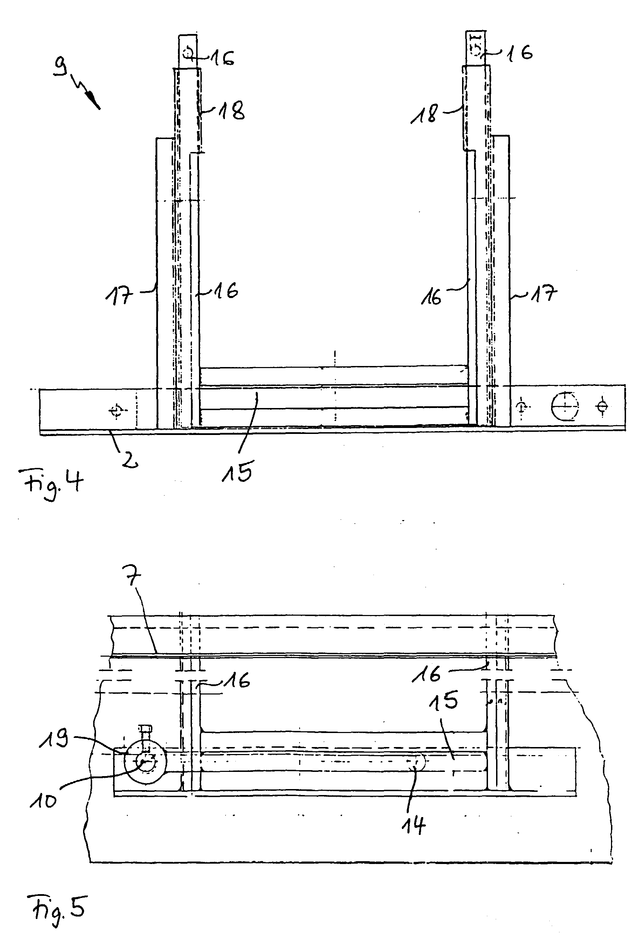

Wie am besten aus Figur 4 bzw. 5 hervorgeht, weist das jeweilige vertikale Hubelement 9 jeweils zwei Hubstangen 16 auf, zwischen denen die Längsführung 15 angeordnet ist, so daß das vertikale Hubelement 9 jeweils eine U-Form aufweist. Diese Hubstangen 16 sind im Rahmenaufbau 2 in nutförmigen Führungen 17 geführt, wobei die nutförmigen Führungen 17 in ihrem oberen Bereich 18 rohrförmig geschlossen ausgebildet sind und die Hubstangen 16 allseitig umgeben. Die Führungen 17 und die Hubstangen 16 weisen dabei bevorzugt einen kreisförmigen Querschnitt auf, natürlich ist auch hier eine andere Querschnittsform möglich.

Zur drehfesten Verbindung der Schwenkhebel 13 an der Verschwenkachse 10 ist vorzugsweise jeweils eine Befestigungsschelle 19 mit Befestigungsschraube 20 vorgesehen, was die Erstjustierung der Verstelleinrichtung vereinfacht. Die Verschwenkhebel 13 können nämlich bei der Ersteinrichtung des Grills in der richtigen Lage gegenüber dem Betätigungselement 11 ausgerichtet und dann mittels der Befestigungsschelle 19 an der Verschwenkachse 10 drehfest befestigt werden, anschließend kann dann eine dauerhafte Verbindung mittels einer Schweißverbindung erfolgen.

Zur Betätigung der Verschwenkeinrichtung zum Anheben oder Absenken des Grillrostes 6 bzw. dessen Rostrahmens 7 wird das Betätigungselement 11 vom Anwender verschwenkt, wodurch entsprechend die Verschwenkachse 10 um denselben Winkel verschwenkt wird. Durch diese Verschwenkung der Verschwenkachse 10 werden entsprechend auch die Schwenkhebel 13 verschwenkt, so daß ihre abgewinkelten Enden 14 sich entlang der Längsführungen 15 der Hubelemente 9 verschieben, so daß sich die Hubelemente 9 bzw. deren Hubstangen 16 aufgrund ihrer Zwangsführung in den Führungen 17 anheben bzw. absenken und dadurch das Anheben bzw. Absenken des Grillrostes 6 bzw. des Rostrahmens 7 bewirken.

Die Betätigung der Verstelleinrichtung zum Anheben des Grillrostes 6 läßt sich noch dadurch vereinfachen, daß eine Hebehilfe vorgesehen wird, die zeichnerisch nicht dargestellt ist. Diese Hebehilfe ist vorzugsweise von einer Feder gebildet, die über einen drehfest mit der Verschwenkachse 10 verbundenen Hebel auf die Schwenkachse 10 einwirkt und bei Freigabe des Betätigungselementes 11 die Verschwenkung der Schwenkachse 10 in Richtung des Anhebens unterstützt.

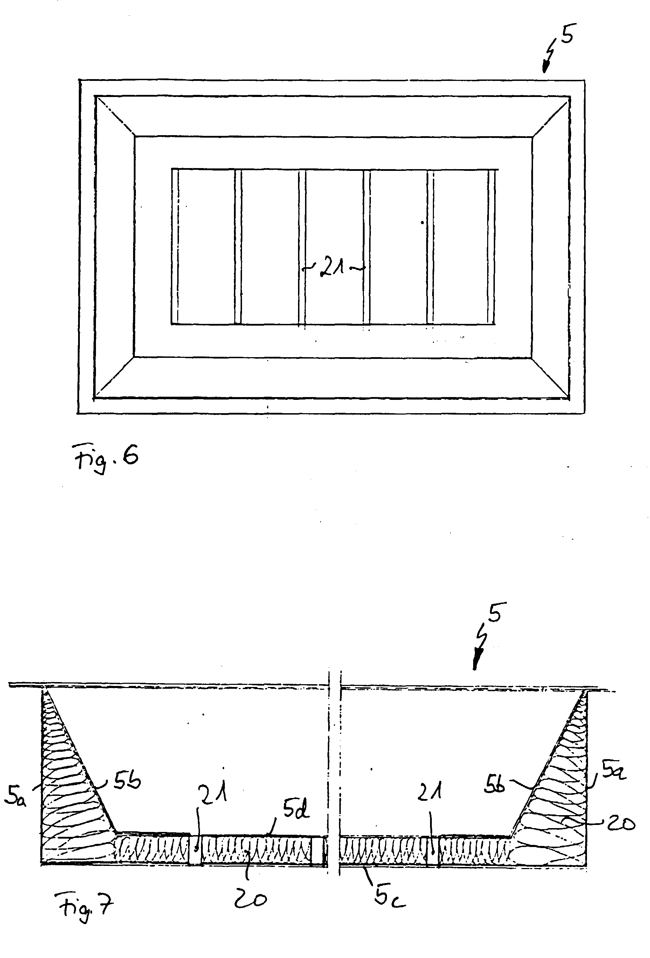

Die besonders bevorzugte Gestaltung der Aufnahmewanne 5 des Grills ist in den Figuren 6 und 7 dargestellt. Die Aufnahmewanne 5 ist sowohl im Bereich ihrer Seitenwände doppelwandig ausgebildet, diese Bereiche sind mit 5a und 5b bezeichnet, als auch im Bereich ihrer Bodenfläche, diese Bereiche sind mit 5c und 5d bezeichnet. Zwischen den Wandbereichen 5a und 5b einerseits und den Wandbereichen 5c und 5d andererseits besteht somit jeweils ein Hohlraum, der mit einer Isolierung 20 ausgefüllt ist. Diese Isolierung kann beispielsweise aus Keramikvlies bestehen. In der Bodenfläche sind zwischen den doppelwandigen Bereichen Schlitze 21 vorgesehen, welche den Austritt von Holzkohlenasche ermöglichen. Die inneren Seitenwandbereiche 5b der Aufnahmewanne 5 sind vorzugsweise nicht vertikal, sondern geneigt angeordnet, beispielsweise in einem Winkel von 60° bis 65°. Die so beschriebene Aufnahmewanne ist grundsätzlich auch für andere Grills geeignet, sie ermöglicht eine ausgesprochen gute Wärmeisolierung und macht eine Isolierung der Gehäusewandungen des Grills entbehrlich.

Natürlich ist die Erfindung nicht auf die dargestellten Ausführungsbeispiele beschränkt. Weitere Ausgestaltungen sind möglich, ohne den Grundgedanken zu verlassen. So kann beispielsweise die Aufnahmewanne 5 auch anders gestaltet sein und auch das Getriebe zwischen der Verschwenkachse 10 und den vertikalen Hubelementen 9 kann anders ausgebildet sein und dergl. mehr.

## Patentansprüche

1. Grill mit einem Rahmenaufbau mit außenliegenden Gehäusewänden, wobei in den Rahmenaufbau eine Aufnahmewanne für Holzkohle oder dergl. lösbar eingesetzt ist, und mit einem gegenüber dem Rahmenaufbau mittels einer Verstelleinrichtung höhenverstellbaren Grillrost,
dadurch gekennzeichnet,
daß die Verstelleinrichtung an zwei gegenüberliegenden Seiten des Rahmenaufbaus (2) in diesem geführte vertikale Hubelemente (9) aufweist, die jeweils über ein Getriebe mit einer gemeinsamen, im Rahmenaufbau gelagerten Verschwenkachse (10) verbunden sind, wobei die Verschwenkachse (10) drehfest mit einem außerhalb des Rahmenaufbaus (2) angeordneten Betätigungselement (11) verbunden ist.

2. Grill nach Anspruch 1,
dadurch gekennzeichnet,
daß das Getriebe jeweils einen drehfest mit der Verschwenkachse (10) verbundenen Schwenkhebel (13) aufweist, der freiendseitig mit einem abgewinkelten Ende (14) in eine horizontal angeordnete Längsführung (15) des jeweiligen Hubelementes (9) eingreift und entlang dieser bei Verschwenkung der Verschwenkachse (10) verfahrbar ist, derart, daß dabei das jeweilige im Rahmenaufbau (2) geführte vertikale Hubelement (9) anheb- bzw. absenkbar ist.

3. Grill nach nach Anspruch 2,
dadurch gekennzeichnet,
daß das jeweilige vertikale Hubelement (9) jeweils zwei Hubstangen (16) aufweist, zwischen denen die Längsführung (15) angeordnet ist, derart, daß das vertikale Hubelement (9) eine U-Form aufweist.

4. Grill nach Anspruch 3,
dadurch gekennzeichnet,
daß die Hubstangen (16) im Rahmenaufbau (2) in nutförmigen Führungen (17) geführt sind, wobei die nutförmigen Führungen (17) im oberen Bereich (18) rohrförmig geschlossen ausgebildet sind und die Hubstangen (16) allseitig umgeben.

5. Grill nach Anspruch 4,
dadurch gekennzeichnet,
daß die Führungen (17) und die Hubstangen (16) einen kreisförmigen Querschnitt aufweisen.

6. Grill nach Anspruch 2 oder einem der folgenden,
dadurch gekennzeichnet,
daß die Schwenkhebel (13) mittels Befestigungsschellen (19) und/oder Schweißverbindungen an der Verschwenkachse (10) drehfest befestigt sind.

7. Grill nach Anspruch 1 oder einem der folgenden,
dadurch gekennzeichnet,
daß die Verstelleinrichtung eine Hebehilfe aufweist, die vorzugsweise als mit der Verschwenkachse (10) zusammenwirkende Feder ausgebildet ist.

8. Grill, insbesondere nach Anspruch 1 oder einem der folgenden,
dadurch gekennzeichnet,
daß die Aufnahmewanne (5) wenigstens im Bereich ihrer Seitenwände (5a,5b) doppelwandig unter Ausbildung eines umlaufenden Hohlraumes ausgebildet ist, wobei der Hohlraum mit einer Isolierung (20) ausgefüllt ist.

9. Grill nach Anspruch 8,
dadurch gekennzeichnet,
daß auch die Bodenfläche der Aufnahmewanne (5) doppelwandig (5c,5d) ausgebildet ist und der entsprechende Hohlraum mit einer Isolierung (20) ausgefüllt ist.

10. Grill nach Anspruch 9,
dadurch gekennzeichnet,
daß die Bodenfläche mit Schlitzen (21) versehen ist.
